# EUROPÄISCHE PATENTSCHRIFT

(11) **EP 0 692 408 B1**
(45) Veröffentlichungstag und Bekanntmachung des Hinweises auf die Patenterteilung: **09.08.2000**
(21) Anmeldenummer: 95109507.4
(22) Anmeldetag: 20.06.1995
(51) Int. Cl.: B60R 5/04

(54) **Abdeckrollo oder -einrichtung für einen Kofferraum eines Kraftfahrzeuges**
Roller blind or cover device for a motor vehicle boot
Store ou dispositif cache-bagages pour un coffre de véhicule automobile

(30) Priorität: 12.07.1994 DE 4424498
(43) Veröffentlichungstag der Anmeldung: 17.01.1996
(73) Patentinhaber: Baumeister & Ostler GmbH & Co., 73773 Aichwald (DE)
(72) Erfinder: Ament, Eduard, D-73772 Aichwald 2 (DE)
(74) Vertreter: Rüger, Rudolf, Dr.-Ing.

(56) Entgegenhaltungen:
- EP-A- 0 345 438
- EP-A- 0 385 191
- EP-A- 0 461 381
- DE-C- 3 819 766
- DE-C- 4 135 663

## Beschreibung

Die Erfindung betrifft ein Abdeckrollo oder eine -einrichtung für den Kofferraum eines Kraftfahrzeuges.

Insbesondere bei sogenannten Kombiwagen ist der hinter der Rücksitzbank befindliche Lade- oder Kofferraum für gewöhnlich von außen einsehbar, da in der Karosserie standardmäßig keine Abdeckungen vorgesehen sind. Solche Abdeckungen würden stören, wenn in dem Laderaum größere Gegenstände untergebracht werden sollen oder wenn die Rücksitzbank zur Vergrößerung des Laderaumes umgelegt bzw. aufgestellt wird.

Die freie Einsehbarkeit des Laderaums wird häufig als unerwünscht empfunden, weshalb es als Zubehör Abdeckrollos für den Laderaum gibt. Diese Abdeckrollos werden an der Rücklehne der Rücksitzbank oder in deren unmittelbarer Nähe an den Seiten der Karosserie befestigt. Die Rollobahn des Abdeckrollos lässt sich dann über die Laderaumöffnung ziehen.

Wegen der leichteren Herausnehmbarkeit des Abdeckrollos werden oft springrolloähnliche Konstruktionen eingesetzt, die allerdings den Nachteil haben, dass sich die Rollobahn in der Mitte deutlich einsenkt und gegenüber Belastung empfindlich ist.

Eine andere Form der Laderaumabdeckung ist aus der DE-C 41 35 663 bekannt. Bei dieser Laderaumabdeckung enthält das Kraftfahrzeug unterhalb der hinteren Seitenfenster Führungsschienen, die sich von der Rückseite der aufgerichteten Rücksitzlehne bis zur Heckklappenöffnung erstrecken. Die Führungsschienen dienen dem Führen von mehreren Spriegeln, an denen eine Abdeckplane befestigt ist. Um die Abdeckplane zusammen mit den Spriegeln vollständig aus dem Laderaum entnehmen zu können, sind die Führungsschienen in einen im Fahrzeug verbleibenden Abschnitt und einen herausnehmbaren Abschnitt aufgeteilt.

Wenn die Abdeckplane mit den Spriegeln entnommen werden soll, werden zunächst sämtliche Spriegel in einer Paketstellung in die herausnehmbaren Teile der Führungsschienen geschoben. Sodann werden diese Teile aus dem Fahrzeug entnommen. Diese Maßnahme erleichtert das Einsetzen des Abdeckrollos wesentlich, weil nicht jeder Spriegel für sich bei Einsetzen in die Führungsschiene eingefädelt werden muss.

Damit die Spriegel bei herausgenommenen Führungschienenabschnitten nicht aus diesen freikommen können, sind Rastfedern vorgesehen, die mit jenem Spriegel zusammen wirken, der in der Paketstellung am äußeren Ende liegt.

Nachteilig bei dieser Anordnung ist, dass durch eine unzweckmäßige Handhabung gegebenenfalls die Spriegel trotz Verrastung hinter der Feder freikommen können. Die Rastkraft durch die Feder muss ein Kompromiss sein zwischen Bedienbarkeit im eingesetzten Zustand und der Sicherung der Spriegel bei herausgenommenen Führungsschienenabschnitten.

Ausgehend hiervon ist es Aufgabe der Erfindung ein Abdeckrollo oder -einrichtung für Stau- und Laderäume von Kraftfahrzeugen, das bzw die im eingesetzten Zustand leicht bedienbar ist, bei dem bzw. der nicht die Gefahr besteht, dass die Streben aus den Aufnahmemitteln herausfallen können, wenn die Aufnahmemittel aus dem Fahrzeug entnommen sind.

Diese Aufgabe wird erfindungsgemäß durch das Abdeckrollo bzw. die -einrichtung mit den Merkmalen des Anspruchs 1 gelöst.

Das Abdeckrollo gemäß der Erfindung, weist eine sichere Verriegelung der Streben auf, wenn die Aufnahmemittel von den Führungsschienen getrennt sind, und die Streben sind frei aus dem Aufnahmemittel herausbewegbar, wenn die Aufnahmemittel im Kraftfahrzeug eingesetzt sind.

Wenn jedes Verriegelungsglied in eine Richtung bewegbar ist, die zumindest eine Komponente parallel zu den Streben aufweist, und weil das Verriegelungsglied eine Anschlagfläche aufweist, die in der Verriegelungsstellung in eine durch das Aufnahmemittel definierten Bewegungsbahn der Endabschnitte der Streben hineinragt, können die Verriegelungsglieder nicht durch Druck auf die Streben in die Freigabestellung überführt werden.

Eine besonders einfache und stabile Konstruktion lässt sich erreichen, wenn das Verriegelungsglied als Schieber ausgebildet ist, damit keine Kraft von den Streben auf das Verriegelungsglied in Richtung Freigabestellung ausgeübt wird.

Das Verriegelungsglied könnte aber auch als drehbarer Riegel ausgebildet werden, dessen Drehachse im wesentlichen quer zu der Längsachse der Streben liegt. Diese Gestaltung hat den Vorteil, dass der Verriegelungsmechanismus weniger empfindlich gegen Verklemmen bspw. infolge von Schmutz ist.

Vorteilhaft ist dem Verriegelungsglied eine Sicherungseinrichtung zugeordnet, um bei herausgenommenem Aufnahmemittel das Verriegelungsglied in der Verriegelungsstellung zu halten. Diese Sicherungseinrichtung könnte besonders einfach von einer Feder, insbesondere von einer am Betätigungsglied angreifenden Blattfeder gebildet werden.

Eine besonders einfache Betätigung des Betätigungsglieds lässt sich erreichen, wenn das Betätigungsglied in der Verriegelungsstellung aus einer den Streben des zugehörigen Aufnahmemittels gegenüber liegenden Außenseite herausragt.

Zum Schutz gegen unbeabsichtigte Betätigung des Betätigungsglieds, z.B. bei dem Hinstellen des herausgenommenen Rollos, ist es besonderes vorteilhaft, das Aufnahmemittel mit einem aus der Außenseite herausragenden Schutzkragen zu versehen, der jedoch nicht eine beabsichtigte Betätigung des Betätigungsglieds beim Einsetzen behindert.

Zur lagerichtigen Positionierung des Aufnahmemittels könnte das Aufnahmemittel mit einem mit der zugehörigen Führungsschiene zusammenwirkenden Führungsmittel an einem betreffenden Ende der Führungsschiene versehen werden. Das Führungsmittel wird am Einfachsten realisiert, wenn das Führungsmittel zwei Vorsprünge aufweist, mit denen es ein Führungsschienenende an dessen Oberseite und dessen Unterseite umgreift.

Ein sicherer Halt wird gewährleistet und ein Klappern wird verhindert, wenn jedem Aufnahmemittel eine Vorspanneinrichtung zugeordnet ist, die das Aufnahmemittel gegen ein zugehöriges Führungsschienenende presst.

Bei dem Einsetzen der Aufnahmemittel sollte das Aufnahmemittel durch einen Druck von unten nach oben gegen diese Vorspanneinrichtung gedrückt werden. Eine Erleichterung ist es, wenn zumindest eine Teilfläche, mit der das Aufnahmemittel gegen sein zugehöriges Führungsschienenende angepresst wird, schräg zu der Längsachse der Führungsschiene ist.

Eine weitere Erleichterung könnte darin bestehen, dass das Aufnahmemittel einen ersten Steuereinrichtungsteil aufweist, der mit einem auf dem Kraftfahrzeug vorhandene zweiten Steuereinrichtungsteil derart zusammenwirkt, dass das Betätigungsglied erst dann mit dem zugehörigen Kraftfahrzeugteil in Eingriff kommt und das Verriegelungsglied in die Freigabestellung überführt, wenn das Aufnahmemittel eine Position erreicht hat, in welcher die Streben nicht neben den Führungsschienen aus dem Aufnahmemittel heraus bewegbar sind. Hierdurch werden Fehlbedienungen vermieden, die auftreten können, wenn das jeweilige Aufnahmemittel weit genug eingesetzt ist, damit die Verriegelungseinrichtung für die Streben geöffnet ist, während der Führungsschlitz des betreffenden Aufnahmemittels noch an der benachbarten Führungsschiene vorbei zeigt. Würde der Benutzer in dieser Situation an den Streben ziehen, würde er zumindest auf einer Seite die Streben aus dem Aufnahmemittel herausziehen.

Eine besonderes einfache, robuste und leicht zu handhabende Realisierung die Steuereinrichtungsteile besteht in der Verwendung eines Vorsprungs oder Zapfens als eines der beiden Steuerungsteile und einer Kulissenführung als anderes Steuereinrichtungsteil.

Die Handhabung wird vereinfacht und die Position, in welche das Verriegelungsglied in die Freigabestellung bzw. in die Verriegelungsstellung überführt wird, wird genau festgelegt, wenn die Kulissenführung zwei Führungsabschnitte aufweist, die an einem Scheitel ineinander übergehen und die derart gestaltet sind, dass der erste Führungsabschnitt bei einer von dem Scheitel ausgehenden Bewegung des Zapfens oder des Vorsprungs längs des ersten Führungsabschnitts eine Bewegung des Aufnahmemittels auf das zugehörige Führungsschienenende zu und der zweite Führungsabschnitt bei einer von dem Scheitel ausgehenden Bewegung des Zapfens oder des Vorsprungs längs des zweiten Führungsabschnitts eine Bewegung des Aufnahmemittels nach unten erzwingt. Außerdem ist der Scheitel so angeordnet, dass bei an dem Scheitel befindlichem Zapfen oder Vorsprung die Führungsmittel des Aufnahmemittels von dem Führungsschienenende beabstandet sind.

Die Kulissenführung kann in der Aufnahmetasche gebildet werden, wobei sich der Zapfen oder Vorsprung auf der Außenseite des Aufnahmemittels befindet, oder die Kulissenführung kann in der Außenseite des Aufnahmemittels ausgebildet werden, wobei der Zapfen oder Vorsprung sich in der Aufnahmetasche befindet.

Zur Halterung jedes Aufnahmemittels ist vorzugsweise eine Aufnahmetasche vorgesehen, die eine in Richtung auf die gegenüberliegende Aufnahmetasche weisende Öffnung, die in Verlängerung der jeweiligen Führungsschiene verläuft, sowie eine Einsetzöffnung aufweist.

Um ein Herausgleiten der Streben aus dem dem Führungsschienenende abliegenden Ende des Aufnahmemittels, das kein Verriegelungsglied aufweist, zu verhindern, ist das Aufnahmemittel vorzugsweise an seinem von dem Führungsschienenende abliegenden Ende zumindest teilweise verschlossen.

Damit auch vom Rücksitz her das Abdeckrollo zu öffnen ist, ist das Aufnahmemittel bevorzugt mit einer Rasteinrichtung versehen, durch die dem Rücksitz benachbarte Strebe verrastet gehalten ist, so dass der Benutzer diese Strebe nach hinten an der Rasteinrichtung vorbei und in die Führungsschienen schieben kann.

Zur Sicherung einer Parallelbewegung zumindest der Strebe, die beim Öffnen oder Schließen des Abdeckrollos oder der -einrichtung den größten Weg zurücklegt, d.h. die erste und/oder die letzte Strebe, ist vorzugsweise eine Synchronisierungseinrichtung vorhanden, die vorteilhaft an den Enden dieser/diesen Strebe(n) gelagerte Zahnräder aufweist, die drehfest miteinander verbunden sind und in in den Führungsschienen enthaltenen Zahnstangen eingreifen. Damit können die Streben sich durch Schiefziehen nicht festklemmen und das Öffnen und Schließen des Abdeckrollos wird wesentlich erleichtert.

In der Zeichnung sind zwei Ausführungsbeispiele des Gegenstandes der Erfindung dargestellt. Es zeigen:
- Fig. 1: ein Abdeckrollo gemäß der Erfindung in einer perspektivischen Darstellung, wobei eine Seitenwand des PKW weggebrochen ist,
- Fig. 2: ein Aufnahmemittel mit Verriegelungsglied in Verriegelungsstellung, in einer perspektivischen Darstellung,
- Fig. 3: ein Aufnahmemittel mit Verriegelungsglied in Freigabestellung, in einer perspektivischen Darstellung,
- Fig. 4: das Aufnahmemittel im eingesetzten Zustand, in einem Längsschnitt,
- Fig. 5: das in den zugehörigen Sitz eingesetzte Aufnahmemittel mit Rollobahn und Streben in einer schematischen Querschnittdarstellung, gesehen aus Richtung der Führungsschienen,
- Fig. 6: das Aufnahmemittel zusammen mit der Rollobahn und den Streben, teilweise herausgenommen und in einer Querschnittsdarstellung ähnlich Fig. 5,
- Fig. 7: ein weiteres Ausführungsbeispiel eines Abdeckrollos gemäß der Erfindung in einer perspektivischen Darstellung ähnlich Fig. 1,
- Fig. 8: das Rollo nach Fig. 7 im eingesetzten Zustand mit in der Freigabestellung befindlichem Verriegelungsglied, in einer schematischen Ansicht von vorne und
- Fig. 9: das Rollo nach Fig. 7 im herausgenommenen Zustand mit in der Verriegelungsstellung befindlichem Verriegelungsglied, in einer schematischen Ansicht von vorne.

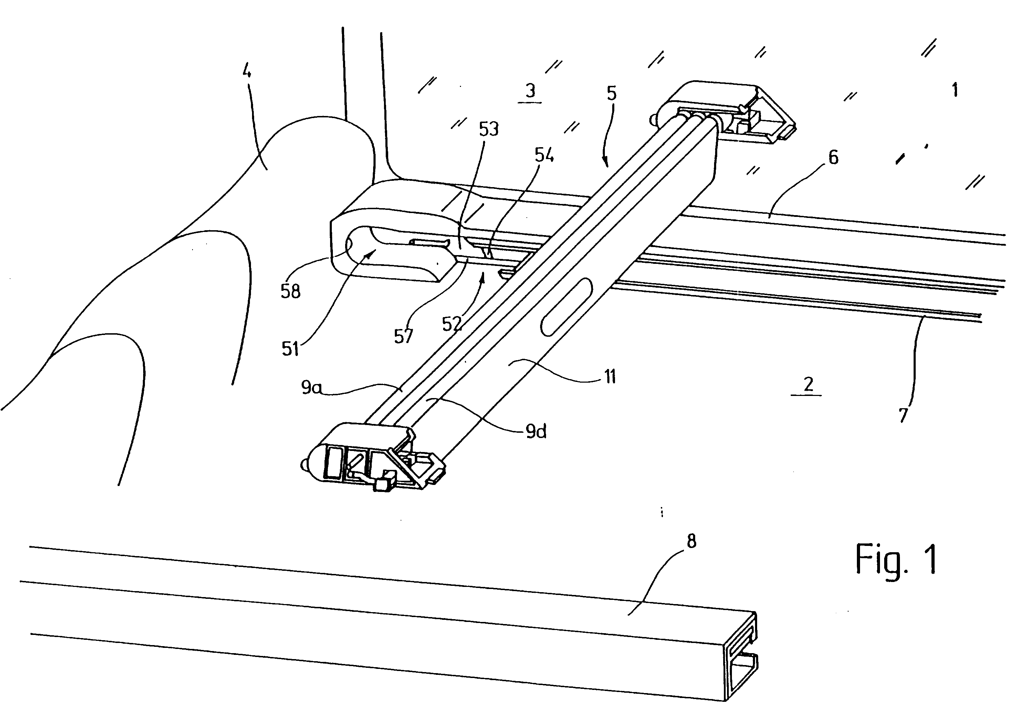

In Fig. 1 ist der Laderaum 1 eines Kombiwagens perspektivisch veranschaulicht. Über einer Seitenwand 2 befindet sich ein hinteres Heckfenster 3, während den vorderen Abschluss des Laderaums 1 eine Rücksitzlehne 4 einer Rücksitzbank bildet.

Zum Abdecken des Laderaums 1 ist ein Abdeckrollo 5 vorgesehen, das sich knapp unterhalb einer Unterkante 6 des Seitenfensters 3 befindet und etwa auf Höhe der Oberkante der Rücksitzlehne 4 angeordnet ist. Das Abdeckrollo 5 weist zwei parallel und im Abstand voneinander befindliche gerade Führungsschienen 7 und 8 auf, die knapp unterhalb der Unterkante der benachbarten Seitenfenster 3 an jeder der beiden Seitenwände 2 befestigt sind. Die Führungsschienen 7 und 8 erstrecken sich etwa von der Rückseite der Rücksitzlehne 4 bis zu einer Hecköffnung (nicht gezeigt) des PKW, die durch eine nicht veranschaulichte Ladeklappe zu verschließen ist.

Die Führungsschienen 7 und 8 dienen der Führung von bei diesem Ausführungsbeispiel insgesamt drei oder vier rohrförmigen Streben 9a bis 9d, die parallel zueinander verlaufen und endseitig in den Führungsschienen 7, 8 nach dem Einsetzen gehaltert sind. Die rohrförmigen Streben 9a bis 9d tragen eine Rollobahn 11, an der sie äquidistant verteilt befestigt sind. Die Rollobahn 11 ist ein im wesentlichen rechteckiger Kunststoff-Folienzuschnitt, der gegebenenfalls eine Stoffverstärkung aufweist und dessen Breite gleich dem Abstand der beiden Führungsschienen 9 und 8 voneinander ist, während die Länge des Zuschnitts dem Abstand der Rückseite der Rücksitzlehne 6 von der Ladeöffnung entspricht. Die letzte Strebe 9d ist mit der der Ladeöffnung benachbarten Kante der Rollobahn 11 verbunden, während die am weitesten vorne liegende Strebe 9a bei eingesetztem Abdeckrollo in der Nähe der Rücksitzlehne 4 verrastet ist. Durch manuelles Verschieben der letzten Strebe 9d in Richtung weg von der Rücksitzlehne 4 lässt sich die Rollobahn 11 über dem Laderaum 1 ausbreiten, um den Laderaum 1 nach oben abzuschließen. Andererseits kann die Rollobahn 11 auch wiederum in Richtung auf die Rücksitzlehne 4 zurückgeschoben werden, wobei die Rollobahn 11 zwischen den Streben 9a bis 9d herunterhängende Falten bildet, wenn die Streben 9a bis 9d dicht zusammengeschoben sind.

Um die Rollobahn 11 zusammen mit den daran befestigten Streben 9a bis 9d leicht herausnehmen zu können, wenn der Laderaum 1 durch Umlegen der Rücksitzlehne 6 vergrößert werden soll, ist das Abdeckrollo mit zwei Aufnahmestücken 12 versehen, die im eingesetzten Zustand als Verlängerung der zugehörigen Führungsschiene 9 oder 8 dienen und eine größere Erstreckung in Richtung der Längsachse der Führungsschienen 9 und 8 als quer dazu aufweisen, wobei ihre Länge dem Platzbedarf entspricht, den die Streben 9a bis 9d bei völlig geraffter Rollobahn 11 erfordern.

Da die beiden Aufnahmestücke 12 abgesehen von ihrer Spiegelbildlichkeit identisch sind, erfolgt die nachstehende Beschreibung der Ausbildung der Aufnahmestücke 12 nur für ein Aufnahmestück. Es versteht sich, dass die Beschreibung auch für das andere Aufnahmestück sinngemäß gilt.

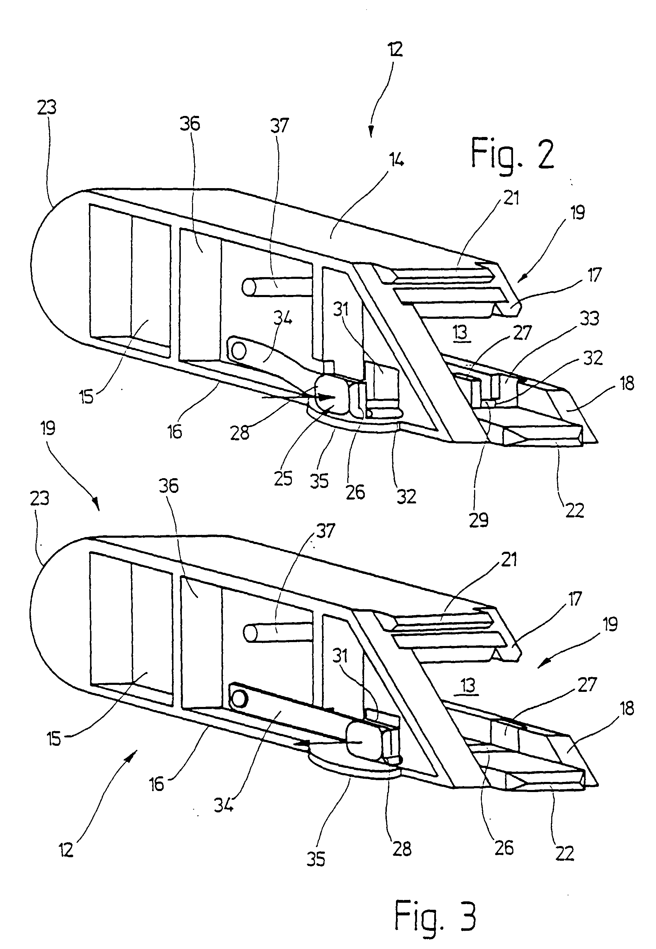

Das Aufnahmestück 12 ist insbesondere in den Fig. 2 und 3 dargestellt. Das Aufnahmestück 12 ist im wesentlichen ein längsgeschlitztes Rohrstück mit einem C-förmig rechteckigen Querschnittsprofil, das einen zu der Längsachse parallelen Schlitz 13 aufweist. Dessen Innenraum wird von einer oberen Wand 14, einer Seitenwand 15 und einer unteren Wand 16 begrenzt. An den von der Seitenwand 15 abliegenden freien Enden der oberen Wand 14 und der unteren Wand 22 sind zwei aufeinander zu weisende und den Schlitz 13 begrenzende Flansche 17, 18 angeformt. Das Querschnittsprofil des Aufnahmestücks 12 entspricht somit dem C-förmigen Führungsschienenprofil. Die Führungsschienen 9, 8 bilden zusammen mit dem zugehörigen Aufnahmestück 12 eine durchgehende Bewegungsbahn für Endabschnitte der Streben 9a bis 9d.

An einem Ende 19, das mit einer der Führungsschienen 9, 8 zusammenwirkt, ist das Aufnahmestück 12 offen und weist an seiner oberen Wand 14 und unteren Wand 16 jeweils einen Vorsprung in Gestalt einer Rippe 21, 22 auf. Das offene Ende 19 ist abgeschrägt, und zwar so, dass die untere Wand 16 länger ist als die obere Wand 14. An seinem anderen Ende ist das Aufnahmestück 12 durch eine halbzylindrische Wand 23 verschlossen, deren Krümmungsachse parallel zu der Achse der Streben 9a..9d liegt.

Das Aufnahmestück 12 enthält in der Nähe von seinem offenen Ende 19 ein Verriegelungsglied 25. Das Verriegelungsglied 25 besteht aus einem länglichen Steg 26, der an einem Ende mit einem quaderförmigen Sperrglied 27 und an dem gegenüberliegenden Ende mit einem Betätigungsglied 28 einstückig versehen ist.

Der Steg 26 des Verriegelungsglieds 25 gleitet längsverschieblich in eine Nut 29. Die Nut 29 befindet sich in der Innenseite der unteren Wand 16 und verläuft quer zu der Bewegungsbahn der Streben 9a..9d, so dass das Sperrglied 27 in die Bewegungsbahn der Strebenenden ragt. Die Nut 29 fluchtet mit einer Öffnung 31 in der Seitenwand 15 und ist mit einem hinterschnittenen Querschnittsprofil versehen, zu dem der Steg 26 komplementär ist. Auf diese Weise kann das Verriegelungsglied 25 nur in Längsrichtung der Nut 29 bewegt werden und ist gegen ein Herausheben aus der Nut 29 nach oben gesichert. Hierzu weisen das Querschnittsprofil der Nut 29 und der Steg 26 an den Flanken ein halbzylindrisches Profil 32 auf. Das Sperrglied 27 steht im verriegelten Zustand aus der Nut 29 nach oben in den Innenraum des Aufnahmestücks 12 und damit in die Bewegungsbahn der Enden der Streben 9a..9d. In der Freigabestellung liegt das Sperrglied 27 zurückgezogen in einer zu dem Sperrglied 27 komplementären Ausnehmung 33, die sich in dem Flansch 18 der unteren Wand 16 befindet. Das Sperrglied ist dann aus dem Lichtraumprofil des Innenraums des C-förmigen Aufnahmestücks 12 herausbewegt.

Das Betätigungsglied 25 ist quaderförmig und steht in der Verriegelungsstellung (Fig. 2) aus der Seitenwand 15 des Aufnahmestücks 12 nach außen vor.

In einem Schlitz des Betätigungsglieds 28 ist eine Blattfeder 34 befestigt, die sich im wesentlichen parallel zu der Längsachse des Aufnahmestücks erstreckt. Ihr anderes Ende ist auf der Außenseite der Seitenwand 15 verankert. Die Blattfeder 34 ist so gestaltet, dass sie in ihrer entspannten Stellung oder Ruhestellung das Verriegelungsglied 27 aus der Ausnehmung 33 heraus und ein Stück weit in den Innenraum des Aufnahmestücks 12 bewegt hat.

Um eine versehentliche Betätigung des Verriegelungsgliedes 25 zu verhindern, ist unterhalb der Öffnung 31 in Verlängerung der unteren Wand 16 eine Auskragung 35 angebracht, die seitlich über das Betätigungsglied 28 übersteht, wenn sich die Blattfeder 34 in ihrer entspannten Stellung befindet.

Zwecks Versteifung des Aufnahmestücks 12 ist es auf seiner Seitenwand 15 mit einer Reihe von vorstehenden Rippen oder Leisten 36 versehen. Außerdem trägt die Außenseite der Seitenwand 15 oberhalb der Blattfeder 24 einen Zapfen 37, der Teil einer noch zu beschreibenden Kulissenführung ist.

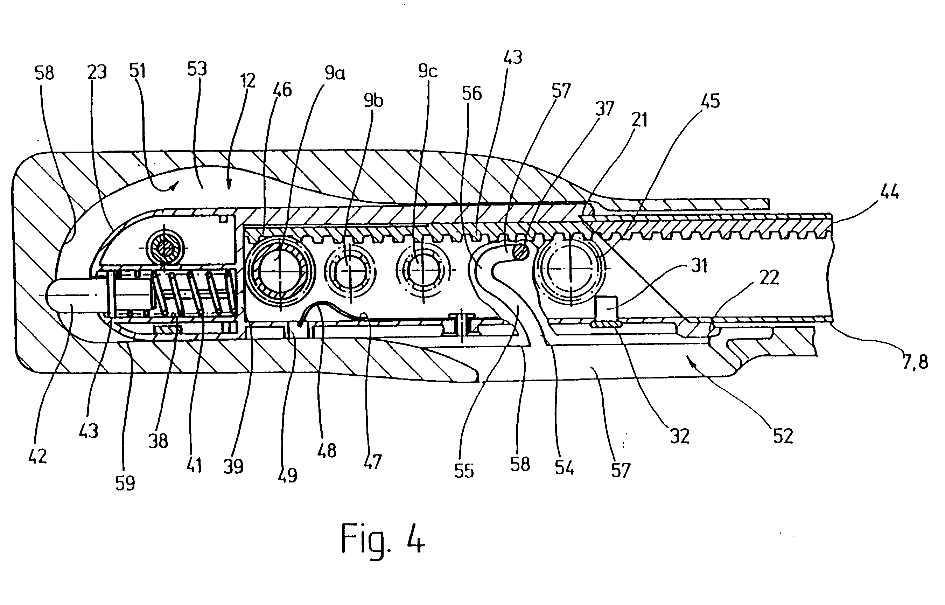

Wie der Querschnitt gemäß Fig. 4 erkennen lässt, befindet sich hinter der zylindrischen Wand 23 eine sackförmige Aufnahmebohrung 38, die bei einer Wand 39 endet. In der Aufnahmebohrung 38 steckt eine als Schraubenfeder ausgebildete Druckfeder 41, mit deren Hilfe ein in der Sackbohrung 38 längsverschiebliches Rastglied 42 in seine nach außen vorgeschobene Stellung vorgespannt ist. Das Rastglied 42 ist in Längsrichtung parallel zu dem Schlitz 13 verschiebbar. Ein auf dem Rastglied 42 vorgesehener Bund 43 verhindert zusammen mit einer entsprechenden Schulter, die in die Sackbohrung 38 hineinragt, dass das Rastglied 42 von der Feder 41 vollständig herausgeschoben wird.

Wie die Figur ferner erkennen lässt, ist an der Innenseite der oberen Wand 14 ein Stück einer Zahnstange 43 befestigt, die teilungsgenau mit einer Zahnstange 44 in der Führungsschiene 7 bzw. 8 fluchtet. Diese Zahnstangen 43 und 44 wirken mit Zahnrädern 45 zusammen, die auf der Strebe 9d drehfest sitzen und in die Verzahnung der Zahnstangen 43, 44 eingreifen. Auch bei unsymmetrischer Krafteinleitung werden mit Hilfe der Zahnstangen 43, 44 und der auf den Streben 9d sitzenden Zahnräder 45 beide Enden dieser Streben 9d um gleiche Beträge verschoben und somit ein Verklemmen verhindert.

Auch die der Rücksitzlehne 4 unmittelbar benachbarte Strebe 9a ist frei beweglich und trägt deswegen an beiden Enden eigene Zahnräder 46, die ebenfalls mit den Zahnstangen 43, 44 kämmen. Um jedoch bei ausgebreitetem Abdeckrollo 5 ein Wegziehen der Strebe 9a infolge der Rücksprungkraft der Abdeckplane 11 zu verhindern, befindet sich auf der Innenseite der unteren Wand 16 eine Rastfeder 47, deren freies Ende 48 als Rastnase nach oben in den Innenraum des Aufnahmestücks 12 hineinragt und die Strebe 9a neben der Endwand 39 verrastet. Die Haltekraft durch die Rastfeder 47, die als Blattfeder ausgeführt ist, lässt sich überwinden, um die Strebe 9a von der Rücksitzlehne 4 weg in Richtung auf die Heckklappe zu verschieben. Dabei federt das freie Ende der Rastfeder 47 in eine entsprechende Öffnung 49 in der unteren Wand 16 zurück, um die Passage der Strebe 9a zu ermöglichen.

Die Halterung der Aufnahmestücke 12 geschieht in Aufnahmetaschen 51, die sich in Verlängerung der Führungsschienen 7, 8 zwischen deren entsprechendem Ende und der Rückseite der Rücksitzlehne 4 befinden. Die Aufnahmetaschen 51 sind sowohl in Richtung aufeinander zu offen als auch an der Nähe der Übergangsstelle zu der betreffenden Führungsschiene 7, 8 mit einer Öffnung 52 an der Unterseite versehen. Nach außen hin sind sie durch eine Seitenwand 53 begrenzt, in der eine als Kulisse dienende Nut 54 enthalten ist. Die Nut 54 wirkt mit dem Zapfen 37 zusammen und bildet mit diesem die bereits erwähnte Kulissenführung. Die Nut 54 beginnt im Bereich der Öffnung 52 mit einem nach oben aufsteigenden Ast 55, der von der Führungsschiene 7, 8 weg gerichtet ist. Der aufsteigende Ast 55 endet an einem Scheitel 56, von wo aus die Nut 54 in einen Ast 57 übergeht, der in seinem letzten Abschnitt in Richtung parallel zu der Längserstreckung der Führungsschienen 7, 8 ragt.

An dem von den Führungsschienen 7, 8 abliegenden Ende ist die Aufnahmetasche 51 von einer Wand 58 verschlossen.

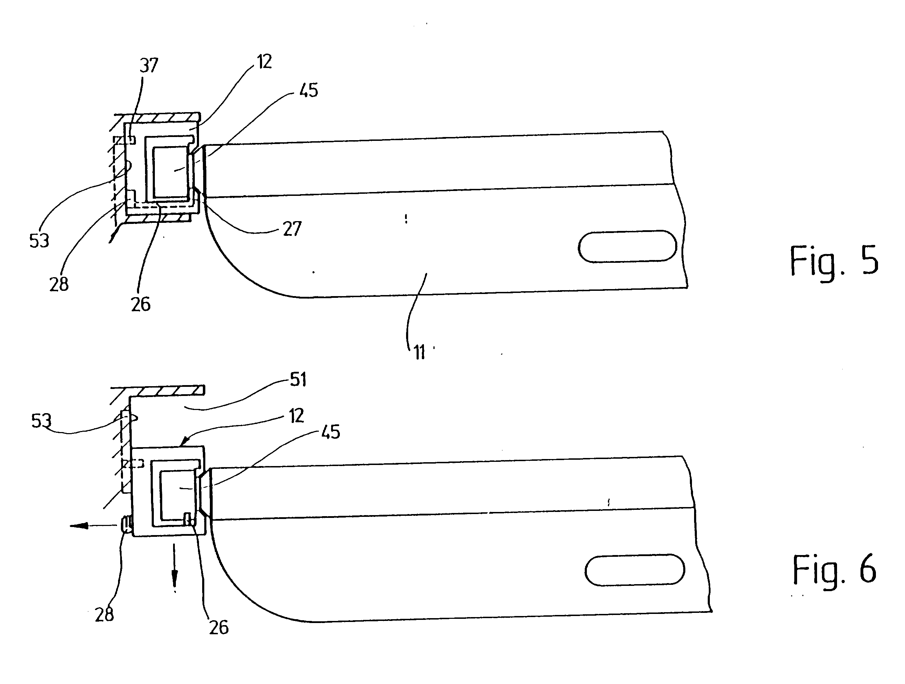

Die Handhabung der insoweit beschriebenen Vorrichtung ist wie folgt, wobei zusätzlich auf die Fig. 5 und 6 Bezug genommen wird:

Vor dem Einsetzen des Abdeckrollos 5 in den PKW ist die Rollobahn 11, wie Fig. 1 zeigt, zusammengeschoben, wobei sich sämtliche Streben 9a...9d mit ihren Enden in den zugehörigen Aufnahmestücken 12 befinden. Die Rollobahn 11 befindet sich einer leicht handhabbaren Paketstellung. Im herausgenommenen Zustand hat die Blattfeder 34 der Aufnahmestücke 12 die Verriegelungsglieder 25 nach außen geschoben, wie dies die Fig. 2 und die Fig. 6 erkennen lassen, womit sich das Sperrglied 27 innerhalb des Innenraums der Aufnahmestücke 12 in der Bewegungsbahn der Enden der Streben 9a...9d befindet. Die Streben 9a...9d können deswegen zu dem vorderen offenen Ende 19 nicht herausfallen bzw. das Aufnahmestück 12 kann nicht von den Enden der Streben 9a... 9d heruntergezogen werden. Selbst wenn die in der Paketstellung befindliche Anordnung auf eine der Seitenwände 15 eines der beiden Aufnahmestücke 12 gestellt wird, bleibt die Verriegelung der Streben 9a...9d in den Aufnahmestücken 12 erhalten, denn die Auskragung 35 schützt das Verriegelungsglied 25 dagegen, von außen eingeschoben zu werden.

Auch wenn bei besonders ungünstigen Umständen die Auskragung 35 nicht hinreichend wirksam werden sollte, weil das Abdeckrollo 5 mit einem der Aufnahmestücke 12 beispielsweise auf eine Kante aufgestellt wird und das Verriegelungsglied 25 entgegen der Wirkung der Feder nach innen eingeschoben wird, bleibt die Verriegelung erhalten, denn zumindest am anderen Aufnahmestück 12 befindet sich das Verriegelungsglied 25 in der Verriegelungsstellung und ein Abziehen des entriegelten Aufnahmestücks 12 würde zu einer Drehung der betreffenden Strebe 9a und 9d führen, was aber wegen der ordnungsgemäßen Verriegelung an dem anderen Aufnahmestück 12 wirksam verhindert ist.

Wenn das Abdeckrollo 5 gebraucht wird, wird es mit seinen Aufnahmestücken 12 von unten her in die betreffenden Aufnahmetaschen 51 eingeführt. Dazu wird das betreffende Aufnahmestück 12 mit seiner halbzylindrischen Wand 23 voraus von unten her durch die Einführöffnung 52 eingesteckt. Im Verlauf der Einführbewegung fädelt sich selbsttätig der Zapfen 37 in die Führungsnut 54 ein, deren unteres Ende in einer Schrägfläche 57 der Seitenwand 53 ausläuft. Die Schrägfläche 57 geht an einem Knick 58, der sich etwa in Verlängerung der Unterfläche 59 der Aufnahmetasche 51 befindet, in die gerade, senkrecht nach oben aufsteigende Wand 53 über.

Sobald der Zapfen 37 in die Nut 54 eingefädelt ist, erzwingt der Ast 55, dass das Aufnahmestück 12 zunächst einmal in Richtung auf die Wand 58 verschoben wird. Dies stellt sicher, dass die Fortsätze 21 und 22 an dem offenen Ende 19 sich nicht in ungünstiger Weise an dem benachbarten Ende der Führungsschiene 7 oder 8 verhaken können. Sobald der Zapfen 37 den Scheitel 56 überwunden hat, kann die Druckfeder 41 mit Hilfe des Rastgliedes 42, das sich an der Wand 59 abstützt, das Aufnahmestück 12, bezogen auf das Fahrzeug nach hinten, in Richtung auf die Führungsschiene 7 bzw. 8 verschieben. Dabei wird die Außenseite der Führungsschiene 7 oder 8 von den Fortsätzen 21 und 22 übergriffen, wie dies Fig. 4 erkennen lässt.

Während des Einsetzens gleitet außerdem das Betätigungsglied 28 zunächst an dem Wandabschnitt 57 und sodann an der Wand 53 entlang, wodurch es, entgegen der Wirkung der Blattfeder 34, in Richtung auf die Seitenwand 15 zu verschoben wird. Diese Verschiebung bringt das Sperrglied 27 aus dem Lichtraumprofil der Enden der Streben 9a...9d, d.h. in eine Stellung, die in Fig. 3 bzw. 5 zu erkennen ist.

Jetzt ist das innere Lichtraumprofil der Aufnahmestücke 12 vollkommen frei und die Streben 9a...9d können ungehindert aus dem Aufnahmestück 12 in die betreffende Führungsschiene 7 oder 8 laufen bzw. zum Öffnen des Abdeckrollos 5 wieder in das Aufnahmestück 12 geschoben werden.

Bei geschlossenem Abdeckrollo 5 kann von der Rücksitzbank her auch die letzte Strebe 9a bewegt werden, wenn durch entsprechende Kraftaufwendung die Wirkung der in den Aufnahmestücken 12 enthaltenen Rastfeder 47 überwunden wird. Diese Rastfeder 47 hält mit Hilfe der Rastnase 48 das betreffende Ende der Strebe 9a an der Wand 39 angedrückt.

Ein Herausfallen der Aufnahmestück 15 nach unten aus den Aufnahmetaschen 51 verhindert das Rastglied 22 in Verbindung mit den Fortsätzen 21 und 22, denn es drückt das Aufnahmestück 12 gegen das zu dem Ende 19 komplementär gestaltete Ende der betreffenden Führungsschiene 7, 8, wodurch ständig ein ordnungsgemäßes Fluchten zwischen dem Aufnahmestück 12 und der Führungsstück 7 oder 8 gewährleistet ist.

Zum Herausnehmen des Abdeckrollos 5 werden zunächst die Streben 9a...9d zurückgeschoben, bis sich alle in dem Aufnahmestück 12 befinden. Sodann werden, infolge der weiterhin, bezogen auf das Fahrzeug von hinten nach vorne wirkenden Kraft, die Aufnahmestücke 12 entgegen der Wirkung der Druckfeder 41 in den betreffenden Taschen 51 ein Stück weit in Richtung auf die Rücksitzlehne 4 verschoben. Hierdurch kommen die leistenförmigen Fortsätze 21, 22 von den Enden der Führungsschienen 7, 8 frei, während gleichzeitig der Führungszapfen 37 des jeweiligen Aufnahmestücks 12 in Richtung auf den Scheitel 56 der Führungsnut 54 bewegt wird. Erst nach Überschreiten des Scheitels 56 können durch leicht von oben nach unten gerichteten Druck an den Streben 9a...9d die Aufnahmestücke 12 im Bereich der Einführungsöffnung 52 nach unten gedrückt werden.

Die Aufnahmetasche 51 ist hierzu am schräg gegenüberliegenden oberen Ende entsprechend erweitert, um eine solche Bewegung zuzulassen. Im Verlauf der Abwärtsbewegung des Endes 19 des Aufnahmestücks 12 werden die Verriegelungsglieder 25 von der Blattfeder 34 aus der Freigabestellung wieder in die Verriegelungsstellung zurückbewegt, so dass unmittelbar, nachdem die Betätigungsglieder 28 über die Schrägfläche 57 gelaufen sind, die Strebenenden in den Aufnahmestücken 12 wieder eingesperrt sind. Ohne dass die Paketstellung verloren geht, kann nun an den Streben 9a...9d das Abdeckrollo 4 aus den Aufnahmetaschen 51 nach unten herausgezogen werden. Die Aufnahmestücke 12 werden dabei zwangsläufig durch ein Zusammenwirken der Sperrglieder 27 mit den Strebenenden ebenfalls aus den Aufnahmetaschen 51 nach unten herausgezogen.

Bei der neuen Anordnung besteht nicht die Gefahr, dass durch Anwenden von Kraft die Aufnahmestücke 12 von den Streben 9a...9d heruntergezogen werden können, wie dies der Fall wäre, wenn lediglich eine Rasteinrichtung die Streben 9a...9d in den Aufnahmestücken 12 festhält. Weil bei der neuen Ausführungsform die Verriegelungseinrichtung formschlüssig und nicht nachgiebig mit den Enden der Streben 9a...9d zusammenwirkt, kann das betreffende Aufnahmestück 12 nur dann abgezogen werden, wenn die Kraft so groß ist, dass eine Zerstörung stattfindet. Ein versehentliches Auseinandergleiten ist jedenfalls wirksam verhindert.

Die Fig. 5 und 6 zeigen in einer Ansicht von hinten das in die Freigabestellung zurückgeschobene Verriegelungsglied 25, wobei sich dessen Sperrglied 27 in der Ausnehmung 33 befindet. Wird hingegen, wie Fig. 6 erkennen lässt, das betreffende Aufnahmestück 12 weit genug nach unten bewegt, dann kann die Blattfeder 34 das Verriegelungsglied 25 ein Stück weit herausziehen, wodurch sich das Sperrglied 27 aus der Ausnehmung 33 heraus in das Lichtraumprofil beispielsweise des Zahnrades 45 bewegt und damit verhindert, dass das Zahnrad 45 das Aufnahmestück 12 verlassen kann.

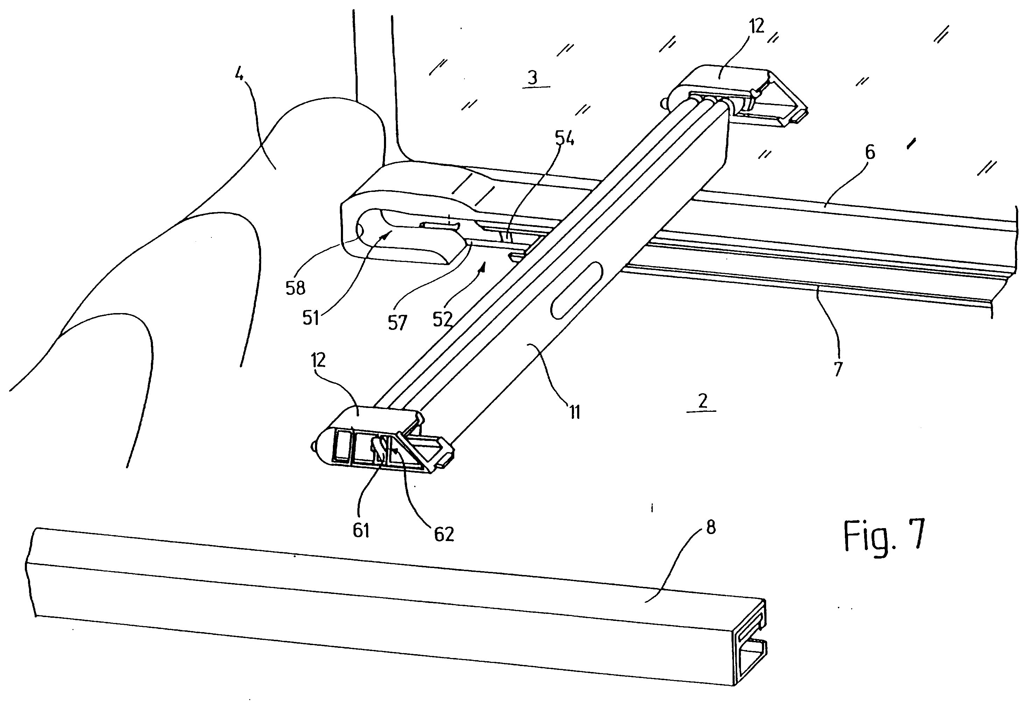

Während in den Fig. 1 bis 4 eine Anordnung gezeigt ist, bei der die Verriegelung dadurch zustandekommt, dass ein als Schieber ausgestattetes Verriegelungsglied 25 parallel zu der Längsachse der Streben 9a...9d hin- und herbewegt wird, zeigen die Fig. 7, 8 und 9 eine Ausführungsform, bei der das Verriegelungsglied 25 ein drehbar gelagerter zweiarmiger Hebel ist.

Gemäß Fig. 7 ist in der Seitenwand 16 ein zweiarmiger Hebel oder Riegel 61 auf einer Drehachse 62 schwenkbar gelagert. Die Drehachse 62 ist in der Seitenwand 15 ortsfest und verläuft rechtwinklig zu der Längserstreckung der Streben 9a...9d, oder, mit anderen Worten, parallel zu der Längserstreckung des Schlitzes 13. Der zweiarmige Hebel 61 besteht aus einem oberen Armteil 63 und einem unteren Armteil 64, wobei der untere Armteil 64 die Funktion des bereits beschriebenen Sperrgliedes 27 und der Armteil 63 die Funktion des Betätigungsgliedes 28 hat.

Im übrigen ist der Aufbau des Abdeckrollos 5 nach den Fig. 7 bis 9 genauso, wie dies bereits beschrieben ist.

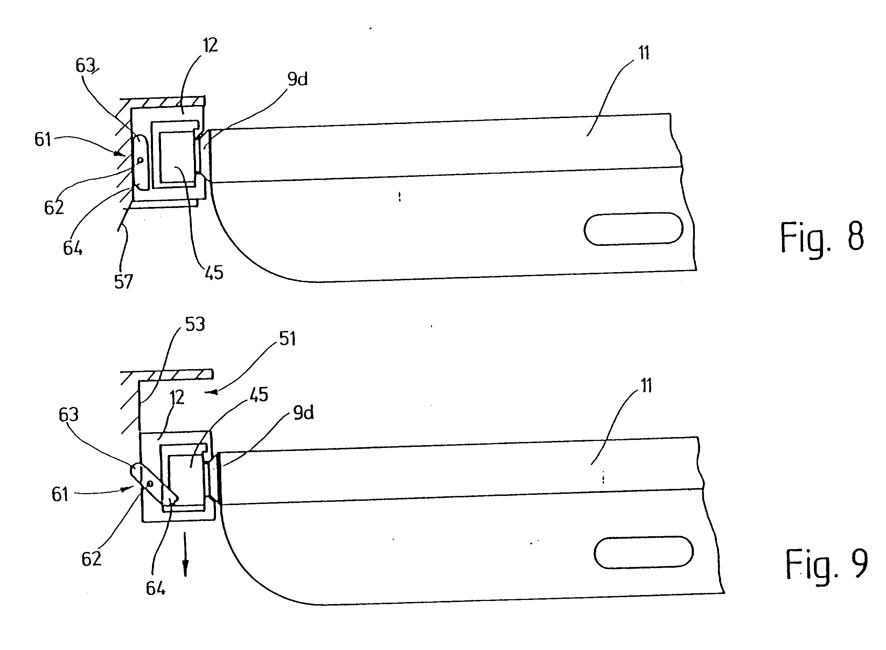

In der Verriegelungsstellung ist der zweiarmige Hebel 61 gemäß Fig. 9 schräg verschwenkt, was bedeutet, dass sein Armteil 64 in das Lichtraumprofil des Zahnrads 45 reicht und damit ein Auslaufen des Zahnrades 45 aus dem Aufnahmestück 12 verhindert. Das obere Armteil 63 ist dagegen seitlich nach außen verschwenkt und dient als Betätigungsglied. Beim Einsetzen wird der zweiarmige Hebel 61 um die Achse 62 verdreht, indem das obere Armteil 63 mit der Seitenwand 53 der Aufnahmetasche 51 zusammenwirkt. Dadurch wird der untere Armteil 64 aus dem Innenraum des Aufnahmestücks 12 zurückgezogen, wie dies Fig. 8 erkennen lässt. Jetzt kann die Strebe 9d mit den Zahnrädern 45 frei hinund herbewegt werden.

Auch bei der Ausführungsform mit schwenkbarem Hebel geschieht eine nicht nachgiebige formschlüssige Verriegelung, wobei der Bewegungsweg des Verriegelungsgliedes zwischen der Freigabestellung und der Verriegelungsstellung eine Komponente aufweist, die parallel zu der Längsachse der Streben 9a...9d liegt.

Wesentlich bei allen denkbaren Ausführungsformen ist, dass bei herausgenommenem Aufnahmestück 12 eine Kraft, die bestrebt ist, das Aufnahmestück 12 von der betreffenden Strebe 9 herunterzuziehen, keine oder keine ausreichend große Kraftkomponente erzeugt, die das Verriegelungsglied aus der Sperr- oder Verriegelungsstellung zurück in die Freigabestellung drückt. Bei dem Ausführungsbeispiel nach den Fig. 1 bis 6 wird dies beispielsweise dadurch erreicht, dass das Sperrglied 27 weit genug in den Innenraum des Aufnahmestücks 12 hineinbewegt ist, so dass keine Kraft entsteht, die gegen die Wirkung der Blattfeder 34 gerichtet ist. Die schräge Fläche des Zahnrades 54 würde beim Anlaufen gegen das Sperrglied 27 nur in der Weise wirken, dass das Sperrglied 27 nach unten gedrückt wird, was aber durch die Nut 29 verhindert ist.

Bei dem Ausführungsbeispiel nach den Fig. 7 bis 9 wird das Zurückdrücken verhindert, indem die miteinander in Eingriff stehenden Flächen an dem Armteil 64 und dem Zahnrad 45 steil genug stehen, als dass ein Zurückdrücken in die Freigabestellung möglich wäre. Im eingesetzten Zustand dagegen ist in allen Fällen eine freie ungehinderte Bewegung aller Streben 9a...9d, mit Ausnahme der Strebe 9a, gewährleistet.

## Patentansprüche

1. Abdeckrollo oder -einrichtung (5) für eine Zugangsöffnung eines Stauraumes, insbesondere eines Lade- oder Kofferraumes (2) von Kraftfahrzeugen, insbesondere von Kombiwagen,
mit einer Rollobahn (11), durch die die Zugangsöffnung abzudecken ist,
mit zwei parallel und mit Abstand zueinander verlaufende Führungsschienen (7,8), die in einer gemeinsamen Ebene verlaufen, die sich vor der durch das Abdeckrollo (5) zu verschließenden Zugangsöffnung befindet,
mit einer Anzahl von parallel mit Abstand zueinander an der Rollobahn (11) befestigten Streben (9a..9d), die die Rollobahn (11) aussteifen und endseitig in den Führungsschienen (7,8) geführt sind,
mit mit den Führungsschienen (7,8) zusammenwirkende Aufnahmemittel (12), die bei geöffnetem Abdeckrollo (5) Endabschnitte sämtlicher Streben (9a..9d) aufnehmen und die samt den Streben (9a..9d) und der Rollobahn (11) von den Führungsschienen (7,8) trennbar sind, gekennzeichnet durch,
Verriegelungsglieder (25,61), von denen jedes in seinem zugehörigen Aufnahmemittel (12) zwischen einer Verriegelungsstellung, in der eine Bewegung der Streben (9a..9d) aus dem Aufnahmemittel (12) heraus gesperrt ist, und einer Freigabestellung, in der die Streben (9a..9d) frei aus dem Aufnahmemittel (12) herausbewegbar sind, hin- und herbewegbar gelagert ist, wobei jedes Verriegelungsglied (25,61) ein Betätigungsglied (28,63) aufweist, das mit einem Kraftfahrzeugteil (53) zusammenwirkt, die Verriegelungsglieder (25,61) in der Verriegelungsstellung sind, wenn die Aufnahmemittel (12) von den Führungsschienen (7,8) getrennt sind, und durch Betätigung der Betätigungsglieder (28,63) beim Einsetzen in das Kraftfahrzeug in die Freigabestellung überführbar sind.

2. Abdeckrollo oder -einrichtung nach Anspruch 1, dadurch gekennzeichnet, dass das Verriegelungsglied (25,61) in dem Aufnahmemittel (12) formschlüssig gelagert ist.

3. Abdeckrollo oder -einrichtung nach Anspruch 1, dadurch gekennzeichnet, dass die Richtung, in der das Verriegelungsglied (25,61) bewegbar ist, eine Komponente parallel zu den Streben (9a..9d) aufweist.

4. Abdeckrollo oder -einrichtung nach Anspruch 1, dadurch gekennzeichnet, dass das Verriegelungsglied (25) als Schieber ausgebildet ist.

5. Abdeckrollo oder -einrichtung nach Anspruch 1, dadurch gekennzeichnet, dass das Verriegelungsglied (61) als drehbarer Riegel ausgebildet ist,

6. Abdeckrollo oder -einrichtung nach Anspruch 5, dadurch gekennzeichnet, dass die Drehachse (62) des Verriegelungsglieds (61) im wesentlichen quer zu der Längsachse der Streben (9a..9d) liegt.

7. Abdeckrollo oder -einrichtung nach Anspruch 1, dadurch gekennzeichnet, dass das Verriegelungsglied (25,61) eine Anschlagfläche aufweist, die in der Verriegelungsstellung in eine durch das Aufnahmemittel (12) definierten Bewegungsbahn der Endabschnitte der Streben (9a..9d) hineinragt.

8. Abdeckrollo oder -einrichtung nach Anspruch 1, dadurch gekennzeichnet, dass dem Verriegelungsglied (25,61) eine Sicherungseinrichtung (34) zugeordnet ist, um bei herausgenommenen Aufnahmemittel (12) das Verriegelungsglied (25,61) in der Verriegelungsstellung zu halten.

9. Abdeckrollo oder -einrichtung nach Anspruch 8, dadurch gekennzeichnet, dass die Sicherungseinrichtung (34) von einer Feder gebildet ist.

10. Abdeckrollo oder -einrichtung nach Anspruch 1, dadurch gekennzeichnet, dass das Betätigungsglied (28,63) in der Verriegelungsstellung aus einer den Streben (9a..9d) des zugehörigen Aufnahmemittels (12) gegenüber liegenden Außenseite (15) herausragt.

11. Abdeckrollo oder -einrichtung nach Anspruch 10, dadurch gekennzeichnet, dass das Aufnahmemittel (12), zum Schutz gegen unbeabsichtigte Betätigung des Betätigungsglieds (28,63), einen aus der Außenseite herausragenden Schutzkragen (35) aufweist.

12. Abdeckrollo oder -einrichtung nach Anspruch 1, dadurch gekennzeichnet, dass jedes Aufnahmemittel (12) mit der zugehörigen Führungsschiene (7,8) zusammenwirkende Führungsmittel (21,22) zur lagerichtigen Positionierung des Aufnahmemittels (12) an einem betreffenden Ende der Führungsschiene (7,8) versehen ist.

13. Abdeckrollo oder -einrichtung nach Anspruch 12, dadurch gekennzeichnet, dass die Führungsmittel (21,22) zwei Vorsprünge aufweist, mit denen es ein Führungsschienenende (7,8) an dessen Oberseite und dessen Unterseite umgreift.

14. Abdeckrollo oder -einrichtung nach Anspruch 1, dadurch gekennzeichnet, dass jedem Aufnahmemittel (12) eine Vorspanneinrichtung (41,42) zugeordnet ist, die das Aufnahmemittel (12) gegen ein zugehöriges Ende einer Führungsschiene (7,8) presst.

15. Abdeckrollo oder -einrichtung nach Anspruch 14, dadurch gekennzeichnet, dass zumindest eine Teilfläche des Aufnahmemittel (12) mittels derer das Aufnahmemittel (12) an seinem zugehörigen Ende der Führungsschiene (7,8) anliegt, schräg zur einer Ebene verläuft, auf der die Längsachse der Führungsschiene (7,8) senkrecht steht.

16. Abdeckrollo oder -einrichtung nach Anspruch 1, dadurch gekennzeichnet, dass das Aufnahmemittel (12) einen ersten Steuereinrichtungsteil (37) aufweist, der mit einem an dem Kraftfahrzeug vorhandene zweiten Steuereinrichtungsteil (54) derart zusammenwirkt, dass das Betätigungsglied (28,63) erst dann mit dem zugehörigen Kraftfahrzeugteil in Eingriff kommt und das Verriegelungsglied (25,61) in die Freigabestellung überführt, wenn das Aufnahmemittel (12) eine Position erreicht hat, in welcher die Streben (9a..9d) nicht neben den Führungschienen (7,8) aus dem Aufnahmemittel (12) herausbewegbar sind.

17. Abdeckrollo oder -einrichtung nach Anspruch 16, dadurch gekennzeichnet, dass der eine Steuereinrichtungsteil (37) ein Vorsprung oder Zapfen ist und dass der andere Steuereinrichtungsteil (54) eine Kulissenführung ist.

18. Abdeckrollo oder -einrichtung nach den Ansprüchen 12 und 17, dadurch gekennzeichnet, dass die Kulissenführung (54) zwei Führungsabschnitte (55,57) aufweist, die an einem Scheitel (56) ineinander übergehen und die derart gestaltet sind, dass der erste Führungsabschnitt (57) bei einer von dem Scheitel (56) ausgehenden Bewegung des Zapfens oder des Vorsprungs (37) längs des ersten Führungsabschnitts (57) eine Bewegung des Aufnahmemittels (12) auf das zugehörige Ende der Führungsschiene (7,8) zu und der zweite Führungsabschnitt (55) bei einer von dem Scheitel (56) ausgehenden Bewegung des Zapfens oder des Vorsprungs (37) längs des zweiten Führungsabschnitts (55) eine Bewegung des Aufnahmemittels (12) nach unten erzwingt, und dass der Scheitel (56) so angeordnet ist, dass bei an dem Scheitel (56) befindlichen Zapfen oder Vorsprung (37) die Führungsmittel (12) des Aufnahmemittels (12) von dem Ende der Führungsschiene (7,8) beabstandet sind.

19. Abdeckrollo oder -einrichtung nach Anspruch 1, dadurch gekennzeichnet, dass zur Halterung jedes Aufnahmemittels (12) eine Aufnahmetasche (51) vorgesehen ist, die eine in Richtung auf die gegenüberliegende Aufnahmetasche (51) weisende Öffnung, die in Verlängerung der jeweiligen Führungsschiene (7,8) verläuft, sowie eine Einsetzöffnung (52) aufweist.

20. Abdeckrollo oder -einrichtung nach Anspruch 1, dadurch gekennzeichnet, dass das Aufnahmemittel (12) an seinem von dem Ende der Führungsschiene (7,8) abliegenden Ende (23) verschlossen ist.

21. Abdeckrollo oder -einrichtung nach Anspruch 20, dadurch gekennzeichnet, dass das Aufnahmemittel (12) eine Rasteinrichtung (47) aufweist, durch die die dem verschlossenen Ende (23) benachbarte Strebe (9a) verrastbar zu halten ist.

22. Abdeckrollo oder -einrichtung nach Anspruch 1, dadurch gekennzeichnet, dass eine Synchronisierungseinrichtung (43,44,45,46) zur Sicherung eine Parallelbewegung zumindest der Strebe (9a..9d) vorhanden ist, die beim Öffnen oder Schließen des Abdeckrollos oder der -einrichtung den größten Weg zurücklegt.

23. Abdeckrollo oder -einrichtung nach Anspruch 22, dadurch gekennzeichnet, dass die Synchronisierungseinrichtung (43,44,45,46) an den Enden dieser Strebe (9a..9d) befindliche Zahnräder (45,46) aufweist, die drehfest miteinander verbunden sind und in in den Führungsschienen (7,8) enthaltenen Zahnstangen (43,44) eingreifen.

## Claims

1. Roller cover or cover device (5) for an access opening of a stowage space, particularly a boot or luggage space (2) of motor vehicles, particularly estate cars,
with a length of roller cover (11) by means of which the access opening is to be covered,
with two guide rails (7, 8) which run parallel to and spaced from one another in a common plane which is located in front of the access opening which is to be closed by the roller cover (5),
with a plurality of braces (9a..9d) which are fixed parallel to and spaced from one another on the length of roller cover (11), reinforce the length of roller cover (11) and are guided at the ends in the guide rails (7, 8),
with receiving means (12) which co-operate with the guide rails (7, 8) and receive end portions of all braces (9a..9d) when the roller cover (5) is opened and which, together with the braces (9a..9d) and the length of roller cover (11), can be separated from the guide rails (7, 8),
characterised by
locking members (25, 61), each of which is mounted in its appertaining receiving means (12) so as to be movable to and fro between a locking position in which movement of the braces (9a..9d) out of the receiving means (12) is blocked and a release position in which the braces (9a..9d) are freely movable out of the receiving means (12), each locking member (25, 61) having an actuating member (28, 63) which co-operates with a motor vehicle part (53), the locking members (25, 61) are in the locking position when the receiving means (12) are separated from the guide rails (7, 8) and can be changed over to the release position by actuation of the actuating members (28, 63) during insertion into the motor vehicle.

2. Roller cover or cover device as claimed in Claim 1, characterised in that the locking member (25, 61) is mounted so as to lock positively in the receiving means (12).

3. Roller cover or cover device as claimed in Claim 1, characterised in that the direction in which the locking member (25, 61) is movable has a component which is parallel to the braces (9a..9d).

4. Roller cover or cover device as claimed in Claim 1, characterised in that the locking member (25) is constructed as a slide.

5. Roller cover or cover device as claimed in Claim 1, characterised in that the locking member (61) is constructed as a rotatable latch.

6. Roller cover or cover device as claimed in Claim 5, characterised in that the axis of rotation (62) of the locking member (61) lies substantially transversely with respect to the longitudinal axis of the braces (9a..9d).

7. Roller cover or cover device as claimed in Claim 1, characterised in that the locking member (25, 61) has a stop surface which in the locking position protrudes into a path of movement of the end portions of the braces (9a..9d) which is defined by the receiving means (12).

8. Roller cover or cover device as claimed in Claim 1, characterised in that a securing device (34) is associated with the locking member (25, 61) in order to keep the locking member (25, 61) in the locking position when the receiving means (12) are removed.

9. Roller cover or cover device as claimed in Claim 8, characterised in that the securing device (34) is formed by a spring.

10. Roller cover or cover device as claimed in Claim 1, characterised in that in the locking position the actuating member (28, 63) projects out of an outer face (15) which lies opposite the braces (9a..9d) of the appertaining receiving means (12).

11. Roller cover or cover device as claimed in Claim 10, characterised in that the receiving means (12) has a protective collar (35) projecting out of the outer face for protection against inadvertent actuation of the actuating member (28, 63).

12. Roller cover or cover device as claimed in Claim 1, characterised in that each receiving means (12) is provided with a guide means (21, 22) co-operating with the appertaining guide rail (7, 8) for correct positioning of the receiving means (12) on a relevant end of the guide rail (7, 8).

13. Roller cover or cover device as claimed in Claim 12, characterised in that the guide means (21, 22) has two projections with which it engages around one end of a guide rail (7, 8) on the upper face and the lower face thereof.

14. Roller cover or cover device as claimed in Claim 1, characterised in that a pretensioning device (41, 42) which presses the receiving means (12) against an appertaining end of a guide rail (7, 8) is associated with each receiving means (12).

15. Roller cover or cover device as claimed in Claim 14, characterised in that at least a part-surface of the receiving means (12) by means of which the receiving means (12) rests on its appertaining end of the guide rail (7, 8) extends obliquely with respect to a plane on which the longitudinal axis of the guide rail (7, 8) is perpendicular.

16. Roller cover or cover device as claimed in Claim 1, characterised in that the receiving means (12) has a first control device part (37) which co-operates with a second control device part (54) present on the motor vehicle in such a way that the actuating member (28, 63) only comes into engagement with the appertaining motor vehicle part and changes the locking member (25, 61) over into the release position when the receiving means (12) has reached a position in which the braces (9a..9d) cannot be moved along with the guide rails (7, 8) out of the receiving means (12).

17. Roller cover or cover device as claimed in Claim 16, characterised in that one control device part (37) is a projection or lug and that the other control device part (54) is a sliding guide.

18. Roller cover or cover device as claimed in Claims 12 and 17, characterised in that the sliding guide (54) has two guide portions (55, 57) which merge into one another at a vertex (56) and are constructed in such a way that, in the event of a movement of the lug or the projection (37) out of the vertex (56) along the first guide portion (57), the first guide portion (57) enforces a movement of the receiving means (12) towards the appertaining end of the guide rail (7, 8) and, in the event of a movement of the lug or the projection (37) out of the vertex (56) along the second guide portion (55), the second guide portion (55) enforces a movement of the receiving means (12) downwards, and that the vertex (56) is disposed so that when the lug or projection (37) is located at the vertex (56) the guide means (12) of the receiving means (12) are spaced from the end of the guide rail (7, 8).

19. Roller cover or cover device as claimed in Claim 1, characterised in that in order to hold each receiving means (12) a receiving recess (51) is provided which has an opening which points in the direction of the opposing receiving recess (51) and runs in an extension of the respective guide rail (7, 8), as well as an insertion opening (52).

20. Roller cover or cover device as claimed in Claim 1, characterised in that the receiving means (12) is closed at its end (23) remote from the end (23) of the guide rail (7, 8).

21. Roller cover or cover device as claimed in Claim 20, characterised in that the receiving means (12) has a latching device (47) by which the brace (9a) adjacent to the closed end (23) can be held so that it can be latched.

22. Roller cover or cover device as claimed in Claim 1, characterised in that a synchronising device (43, 44, 45, 46) is provided in order to ensure a parallel movement of at least the brace (9a..9d) which covers the greatest distance during opening or closing of the roller cover or cover device.

23. Roller cover or cover device as claimed in Claim 22, characterised in that the synchronising device (43, 44, 45, 46) has toothed wheels (45, 46) which are located at the ends of this brace (9a..9d), are non-rotatably connected to one another and engage in toothed racks (43, 44) contained in the guide rails (7, 8).

## Revendications

1. Store ou dispositif de couverture (5) pour une ouverture d'accès d'un espace de chargement, en particulier d'un espace de chargement ou d'un coffre à bagages (2) de véhicule automobile, en particulier de véhicule de type break,
avec une bande de store (11) permettant de couvrir l'ouverture d'accès, avec deux rails de guidage (7, 8) disposés parallèlement l'un à l'autre, à distance l'un de l'autre, qui s'étendent dans un plan commun situé devant l'ouverture d'accès à fermer à l'aide du store de couverture (5),
avec un certain nombre de tiges (9a...9d) mutuellement parallèles, fixées à distance les unes des autres à la bande de store (11), qui rigidifient la bande de store (11) et sont guidées dans les rails de guidage (7, 8) au niveau de leurs extrémités,
avec des moyens de réception (12) coopérant avec les rails de guidage (7, 8) qui reçoivent toutes les tiges (9a...9d) lorsque le store de couverture (5) est ouvert et qui, avec les tiges (9a...9d) et la bande de store (11), peuvent être séparés des rails de guidage (7, 8), caractérisé par
des organes de verrouillage (25, 61) qui sont montés mobiles en translation chacun dans un moyen de réception (12) associé entre une position verrouillée, dans laquelle un déplacement des tiges (9a...9d) hors du moyen de réception (12) est empêché, et une position déverrouillée, dans laquelle les tiges (9a...9d) peuvent être amenées librement hors du moyen de réception (12), chaque organe de verrouillage (25, 61) comprenant un organe de commande (28, 63) qui coopère avec une partie (53) de la carrosserie de véhicule, les organes de verrouillage (25, 61) se trouvant dans la position verrouillée lorsque les moyens de réception (12) sont séparés des rails de guidage (7, 8) et étant amenés dans la position déverrouillée par l'actionnement des organes de commande (28, 63), lors de la mise en place dans le véhicule automobile.

2. Store ou dispositif de couverture selon la revendication 1, caractérisé par le fait que l'organe de verrouillage (25, 61) est monté par complémentarité de formes dans le moyen de réception (12).

3. Store ou dispositif de couverture selon la revendication 1, caractérisé par le fait que la direction dans laquelle l'organe de verrouillage (25, 61) peut être déplacé présente une composante parallèle aux tiges (9a...9d).

4. Store ou dispositif de couverture selon la revendication 1, caractérisé par le fait que l'organe de verrouillage (25) est agencé sous forme de verrou coulissant.

5. Store ou dispositif de couverture selon la revendication 1, caractérisé par le fait que l'organe de verrouillage (61) est agencé sous forme de verrou tournant.

6. Store ou dispositif de couverture selon la revendication 5, caractérisé par le fait que l'axe de rotation (62) de l'organe de verrouillage (61) s'étend essentiellement perpendiculairement à l'axe longitudinal des tiges (9a...9d).

7. Store ou dispositif de couverture selon la revendication 1, caractérisé par le fait que l'organe de verrouillage (25, 61) comporte une surface de butée qui, dans la position verrouillée, fait saillie dans une trajectoire de déplacement des extrémités des tiges (9a...9d), définie par le moyen de réception (12).

8. Store ou dispositif de couverture selon la revendication 1, caractérisé par le fait qu'un dispositif de sécurité (34) est associé à l'organe de verrouillage (25, 61), afin de retenir l'organe de verrouillage (25, 61) dans la position verrouillée, lorsque le moyen de réception (12) est extrait.

9. Store ou dispositif de couverture selon la revendication 8, caractérisé par le fait que le dispositif de sécurité (34) est formé d'un ressort.

10. Store ou dispositif de couverture selon la revendication 1, caractérisé par le fait que l'organe de commande (28, 63), dans la position verrouillée, fait saillie dans une face extérieure (15) opposée aux tiges (9a...9d) du moyen de réception concerné.

11. Store ou dispositif de couverture selon la revendication 1, caractérisé par le fait que le moyen de réception (12) comporte un rebord de protection (35) en saillie par rapport à la face extérieure pour empêcher un déclenchement involontaire l'organe de commande (28, 63).

12. Store ou dispositif de couverture selon la revendication 1, caractérisé par le fait que chaque moyen de réception (12) est pourvu d'un moyen de guidage (21, 22) qui coopère avec le rail de guidage (7, 8) concerné, pour assurer le positionnement correct du moyen de réception (12) à l'extrémité concernée du rail de guidage (7, 8).

13. Store ou dispositif de couverture selon la revendication 1, caractérisé par le fait que le moyen de guidage (21, 22) comporte deux avancées avec lesquelles il entoure une extrémité de rail de guidage (7, 8), au niveau de la face supérieure et de la face inférieure de celle-ci.

14. Store ou dispositif de couverture selon la revendication 1, caractérisé par le fait qu'à chaque moyen de réception (12) est associé un dispositif de précontainte (41, 42) qui presse le moyen de réception (12) contre une extrémité correspondante d'un rail de guidage (7, 8).

15. Store ou dispositif de couverture selon la revendication 14, caractérisé par le fait qu'au moins une surface partielle du moyen de réception (12), par l'intermédiaire de laquelle ledit moyen de réception (12) repose sur l'extrémité concernée du rail de guidage (7, 8), s'étend en biais par rapport à un plan perpendiculaire à l'axe longitudinal du rail de guidage (7, 8).

16. Store ou dispositif de couverture selon la revendication 1, caractérisé par le fait que le moyen de réception (12) comporte un premier élément de dispositif de commande (37) qui coopère un second élément de dispositif de commande (54) prévu sur la carrosserie de véhicule de manière telle que l'organe d'actionnement (28, 63) ne vienne en prise avec la partie de carrosserie concernée et amène l'organe de verrouillage (25, 61) dans la position déverrouillée que lorsque le moyen de réception (12) a atteint une position dans laquelle les tiges (9a...9d) ne peuvent plus être amenées hors du moyen de réception (12), à côté des rails de guidage (7, 8).

17. Store ou dispositif de couverture selon la revendication 16, caractérisé par le fait que l'un des éléments de dispositif de commande (37) est une saillie ou un têton et que l'autre élément de dispositif de commande (54) est une coulisse.

18. Store ou dispositif de couverture selon les revendications 12 et 17, caractérisé par le fait que la coulisse (54) comporte deux tronçons de coulisse (55, 57) qui se raccordent au niveau d'un sommet (56) et sont agencés de telle sorte que le premier tronçon de coulisse (57), lors d'un déplacement du têton ou de la saillie (37) depuis le sommet le long du premier tronçon de coulisse (57), provoque un déplacement du moyen de réception (12) en direction de l'extrémité concernée du rail de guidage (7, 8) et que le second tronçon de coulisse (55), lors d'un déplacement du têton ou de la saillie (37) depuis le sommet (56) le long du second tronçon de coulisse (55), provoque un déplacement vers le bas du moyen de réception (12) et par le fait que le sommet (56) est disposé de manière telle que lorsque le têton ou la saillie (37) se trouve au niveau du sommet, les moyens de guidage (12) du moyen de réception (12) sont éloignés de l'extrémité du rail de guidage (7, 8).

19. Store ou dispositif de couverture selon la revendication 1, caractérisé par le fait qu'il est prévu pour tenir chaque moyen de réception (12), un logement (51) qui présente une ouverture dirigée vers le logement (51) en vis-à-vis, disposé dans le prolongement du rail de guidage (7, 8), ainsi qu'une ouverture de montage (52).

20. Store ou dispositif de couverture selon la revendication 1, caractérisé par le fait que le moyen de réception (12) est fermé à son extrémité (23) éloignée du rail de guidage (7, 8).

21. Store ou dispositif de couverture selon la revendication 20, caractérisé par le fait que le moyen de réception (12) comprend un dispositif d'encliquetage (47) grâce auquel la tige (9a) voisine de l'extrémité fermée (23) peut être encliquetée et retenue.

22. Store ou dispositif de couverture selon la revendication 1, caractérisé par le fait qu'il est prévu un dispositif de synchronisation (43, 44, 45, 46) pour assurer un déplacement parallèle d'au moins la tige (9a...9d) qui parcourt la plus grande course lors de l'ouverture ou de la fermeture du store ou du dispositif de couverture.

23. Store ou dispositif de couverture selon la revendication 22, caractérisé par le fait que le dispositif de synchronisation (43, 44, 45, 46) comprend des roues dentées (45, 46) disposées aux extrémités de la tige (9a...9d) qui sont solidaires l'une de l'autre en rotation et engrènent avec des crémaillères (43, 44) prévues dans les rails de guidage (7, 8).
